# EUROPEAN PATENT SPECIFICATION

(11) **EP 1 364 170 B1**
(45) Date of publication and mention of the grant of the patent: **15.06.2005**
(21) Application number: 02748346.0
(22) Date of filing: 14.01.2002
(51) Int. Cl.: F24F 13/02, E04B 1/94

(54) **VENTILATION DUCT CONSTRUCTION AND METHOD OF PROVIDING A FIRE PROTECTED PENETRATION OF A VENTILATION DUCT IN A WALL**
LÜFTUNGSKANALKONSTRUKTION UND VERFAHREN ZUR HERSTELLUNG EINES BRANDGESCHÜTZTEN ANSCHLUSSES EINES LÜFTUNGSKANALS AN EINE WAND
CONSTRUCTION DE CONDUIT DE VENTILATION ET PROCEDE POUR PROTEGER CONTRE LE FEU LA PENETRATION D'UN CONDUIT DE VENTILATION DANS UN MUR

(30) Priority: 01.03.2001 SE 0100692
(43) Date of publication of application: 26.11.2003
(73) Proprietor: Saint-Gobain Isover AB, 260 50 Billesholm (SE)
(72) Inventor: TIGERFELDT, Staffan, S-252 84 Helsingborg (SE)
(74) Representative: Lind, Urban
(86) International application number: PCT/SE2002/000041
(87) International publication number: WO 2002/070962

(56) References cited:
- WO-A1-01/09538
- GB-A- 2 203 900
- GB-A- 2 284 989
- US-A- 4 894 966
- US-A- 5 155 957
- PATENT ABSTRACTS OF JAPAN & JP 2001 252367 A (MIRAI IND CO LTD ET AL.) 18 September 2001
- DATABASE WPI Week 200217, Derwent Publications Ltd., London, GB; AN 2002-128506, XP002970613 & JP 2002 005342 A (FURUKAWA TECHNOMATERIAL KK) 09 January 2002

## Description

### Field of the Invention

The present invention relates to a ventilation duct construction, comprising a ventilation duct through which air is allowed to flow and which is passed through a through hole in a wall, as well as a method of providing a penetration of a ventilation duct in a wall. An increased fire-retardant capability of the ventilation duct construction is achieved by means of the invention.

Fire-retardant capability is here defined as the capability to resist such a temperature rise of the duct air as causes a temperature rise on the outside of the construction.

### Technical Background

To prevent fire from spreading in ventilation ducts, it is common to provide the ventilation ducts with some kind of insulating material, such as rock wool, which is resistant to high temperatures and thus prevents fire from spreading. Conventionally, insulation is arranged on the outside of the wall of the duct and is in most cases provided with an outer metal cover.

The ventilation ducts serve to convey air, but noise also propagates easily. By insulating, at least in some sections of the ducts, the inside of the ducts with sound-absorbing material, such as rock wool or glass wool, and lately also materials which are less fire-retardant, e.g. polyester insulation, it is possible to absorb noise efficiently. Hereinafter, sound-absorbing sections of ventilation ducts will also be referred to as sound absorbers.

In case of fire, it is very important to keep down the temperature of the outside of ventilation ducts or sound absorbers as long as possible to increase the fire safety of the surroundings and close objects.

Furthermore, in case of fire on one side of a wall through which a ventilation duct is passed, such as through a through hole in the wall, the fire may increase the temperature in the ventilation duct on said one side. The rising temperature effect may propagate through the duct and thus reach the other side of the wall. It is important to anticipate such an effect and in case of fire keep down the temperature of the outside of the ventilation duct on the other side of the wall.

Some examples relating this kind of fire safety devices are disclosed in US-A-5 155 957, GB-A-2 203 900, GB-A-2 284 989, US-A-4 894 966, WO 0 109 538 or JP-A-2001252367.

### Summary of the Invention

Therefore, one object of the present invention is to provide a ventilation duct construction, in which the time during which the outside temperature can be kept down in case of fire is prolonged.

It is also an object to provide a simple method for increasing the fire-retardancy of a ventilation duct which has been passed through a hole in a wall.

According to the present invention, these objects are achieved by means of a ventilation duct construction, and a method, which have the features stated in the appended claims.

The invention is thus based on the understanding that the fire-retardant capability, for a ventilation duct which penetrates a wall, can be increased by arranging, at least partially, a supplemental thin boundary layer outwardly of the duct with a plate-shaped (circular, elliptic, rectangular, etc.) ending that shields at least a part of the through hole in the wall. Such a boundary layer, on the one hand, provides a supplemental cover configuration having what might be considered as a heat-exchange function and, on the other, provides an additional air insulation effect.

According to one aspect of the invention, a first portion of a protective or shielding sheet structure is thus arranged at least partially around and close to the duct, not in direct contact with the duct, but instead at a short distance from the same so that an air gap is formed therebetween. Also, a second portion of the shielding sheet structure is arranged close to the wall having the through hole, not in direct contact with the wall, but instead at a short distance from the same so that an air gap is formed therebetween.

Surprisingly, it has been found that this simple measure imparts a much improved fire-retardant capability to the construction. Preferably, the thermal bridge between the shielding sheet structure and the duct is made very small, which can easily be achieved with the aid of suitably designed spacer means. Thus, the time of heating the shielding sheet structure is prolonged and in particular the time of heating its outside, i.e. the outside of the entire construction. Likewise, spacer means may be provided between the shielding sheet structure and the penetrated wall.

One advantage of said construction is that the shielding sheet structure, at least initially, has a cooling effect on the hot air in the gap which has been heated by fire. The thicker the selected shielding sheet structure, the better the cooling capability. The selection of the width of the air gap as well as the thickness of the shielding sheet structure must be adjusted to the demands on weight and space. It has been found that a satisfactory effect is obtained even when using a very thin shielding sheet structure and a very small air gap. The shielding sheet structure is preferably made of metal, such as galvanised steel sheet or stainless steel sheet. A typical shielding sheet structure of galvanised steel shows a satisfactory effect even with a thickness of less than 10 mm. The shielding sheet structure preferably has a thickness of less than a few millimetres, more preferably about 1 mm. The first portion of the shielding sheet structure has primarily a cooling effect on the air in the gap between the ventilation duct and the first portion, while the second portion has primarily a cooling effect on the air in the gap between the penetrated wall and the second portion. Thus, the second portion helps to keep the wall at a lower temperature than would have been the case without the shielding sheet structure according to the invention. A relatively long second portion means more cooling capacity.

The size of the air gap, i.e. the distance between the shielding sheet structure and both the duct and the wall, is typically less than 50 mm, preferably less than 20 mm, more preferably less than a few millimetres, such as about 1 mm. This means that the entire construction remains relatively compact.

The shielding sheet structure also has another effect, namely that of distributing the heat over the shielding sheet structure in case it is locally exposed to a considerable temperature rise. This function is particularly pronounced if the shielding sheet structure is made of a material having good thermal conductivity.

According to one embodiment, the shielding sheet structure can be provided with through-holes or perforations to improve the circulation of air and heat exchange. This is because cold ambient air is to be drawn into the gap through openings at the ends of the shielding sheet structure, when the hot air leaks out of the gap through the holes of the shielding sheet structure. As a result, a circulation of air is provided which contributes to the cooling of the air gap and the shielding sheet structure. The number, shape and size of the holes can be selected depending on the desired qualities of the shielding sheet structure. However, the size and the number of the holes have to be chosen, since too big or too many holes could counteract the purpose of the shielding sheet structure. It has, however, been found that good effects are achieved also when the total area of the holes equals half the area of the shielding sheet structure.

The first and the second portion of the shielding sheet structure may be integrated. They may be constructed from one and the same blank or from two different blanks brought together. Alternatively, the first and the second portion of the shielding sheet structure may be arranged in a spaced apart relationship, i.e. in no contact with each other. This achieves a practical opening between the two portions for intake and/or outlet of air.

Depending on the circumstances and the security aspects that must be taken into consideration, the position of the shielding sheet structure may vary. It is possible to surround an entire ventilation duct of about one hundred metres with a shielding sheet structure in accordance with the invention, preferably in separate sections so as to provide openings for the intake of air (i.e. the first portion, which is parallel to the duct, is very long). But it is also possible to provide a ventilation duct with shielding sheet structure only locally near the penetrated wall (i.e. the first portion is relatively short). Irrespective of the above-mentioned alternatives, it is not necessary to arrange shielding sheet along the entire circumference of the ventilation duct. It is quite possible that extra protection is needed only along a part of the circumference of the duct.

The invention is particularly advantageous in case of fire on one side of the wall through which the ventilation duct is penetrated. Such a fire may increase the temperature in the ventilation duct on said one side, the rising temperature effect propagating through the duct and thus reaching the other side of the wall. A shielding sheet structure on the other side will provide the inventive fire-retardant effect.

Suitably, insulation is provided in connection with said through hole in the penetrated wall. The insulation may for instance be packed between the outside of the duct wall and the wall defining the through hole. The insulation seals the through hole around the ventilation duct. Any, suitable insulating material may be applied. An example is mineral wool packed in the inner, middle part of the hole and the respective hole opening around the duct insulation is sealed with filling material, such as plaster or the like.

The cross-sectional shape of the ventilation duct or the sound absorber may vary. Typical shapes are rectangular and circular, but other shapes are also feasible, since the invention is not limited to any particular shape of the duct. The general shape of the shielding sheet structure is suitably selected according to the shape of the ventilation duct or the sound absorber and its relation to the penetrated wall. Preferably, the selection is made in such manner that the shapes conform with each other. A shielding sheet structure according to the invention will besides having a shape (said first portion) that confirms with the ventilation duct, also have a generally flat shape (said second portion) near the wall. If e.g. the ventilation duct is circular, said flat shape may be a circular ring or disc with a hole, and the first portion having the general shape of a circular cylinder or part of a circular cylinder.

The shielding sheet structure according to the present invention may be applied to a duct which is already fire protected, e.g. by means of fire insulation. It has been found that the shielding sheet structure has a remarkable effect on the fire-retardant capability of a ventilation duct even if it is already provided with fire-insulation such as mineral wool. The shielding sheet structure may also be applied to ventilation ducts with other types of insulation, such as e.g. thermal insulation or sound-absorbing insulation, i.e. a sound absorber.

The manner in which the duct is insulated does not limit the scope of the invention. It is, for instance, possible to arrange, on the outside of the wall of the duct, a standard insulation, the outside of which is a metal cover adjacent to which the shielding sheet structure is arranged with the air gap. As mentioned, a ventilation duct section with sound-absorbing insulation is also possible, the shielding sheet structure being arranged so that an air gap forms between the same and the outer cover of the sound absorber.

As already mentioned, the shielding sheet structure can be kept at a suitable distance from the ventilation duct and the wall with the aid of spacer means so that said air gap forms. As examples of spacer means, mention can be made of pins, screws, rivets and distance plates which are arranged between and fixed to the shielding sheet structure and/or the wall of the ventilation duct or the insulation placed thereon, with or without a cover. The same applies to the forming of the air gap between the shielding sheet structure and the penetrated wall having the through hole.

The design of the spacer means should allow the thermal bridge to be minimised. Thus, the spacer means should be small and limited to a small number. It is also possible to form the air gap without any connection at all, and thus without a thermal bridge, between the shielding sheet structure and the ventilation duct. One possibility is to equip the construction with magnets so that the shielding sheet structure is kept "floating" about the ventilation duct. If there is enough space, another possibility of completely avoiding thermal bridges is to provide the shielding sheet structure with an outer suspension which is connected to external holding elements.

It should be understood that it is possible to achieve the air gap between the shielding sheet structure and both the ventilation duct and the penetrated wall by arranging spacer means only between the shielding sheet structure and the ventilation duct. Likewise, it is possible to arrange spacer means only between the shielding sheet structure and the penetrated wall, thus having no direct thermal bridge at all between the ventilation duct and the shielding sheet structure. This second possibility is principally appropriate if the first portion of the sheet is relatively short.

Even if the shielding sheet structure has been discussed so far in connection with both ordinary ventilation ducts and insulated ventilation ducts (such as with fire insulation or sound sound-proofing), the function of the shielding sheet structure is the same, irrespective of the type of duct to which it is applied. The use of a shielding sheet structure according to the invention does not have to be limited to these variants but could also, for instance, be used in connection with heat or condensation insulated ducts.

Besides the discussed ventilation duct construction, the present invention, as already mentioned, relates to a method of providing a ventilation duct construction. According to the method, this is achieved placing a shielding sheet structure externally at least partially around the duct, which is passed through a through hole in a wall, at such a distance that an air gap is formed between the shielding sheet structure and both the duct and the wall. The sheet comprises a first and a second portion, wherein the first portion extends essentially in parallel with the ventilation duct and the second portion extends essentially in parallel with the wall and being located at an end of said first portion nearest to the wall. The fire-retardant capability of the ventilation duct is thereby increased. The invention is thus also applicable to existing installations.

### Brief Description of the Drawings

Fig. 1 schematically shows a longitudinal cross-section of a ventilation duct construction according to one embodiment of the present invention.
Figs. 2A and 2B schematically show perspective views of the shielding sheet structure in Fig 1.
Fig. 3 schematically shows a longitudinal cross-section of a ventilation duct construction according to another embodiment of the present invention.
Fig. 4 schematically shows a longitudinal cross-section of a ventilation duct construction according to yet another embodiment of the present invention.
Fig. 5. schematically shows a longitudinal cross-section of a ventilation duct construction according to a further embodiment of the present invention.

### Description of Preferred Embodiments

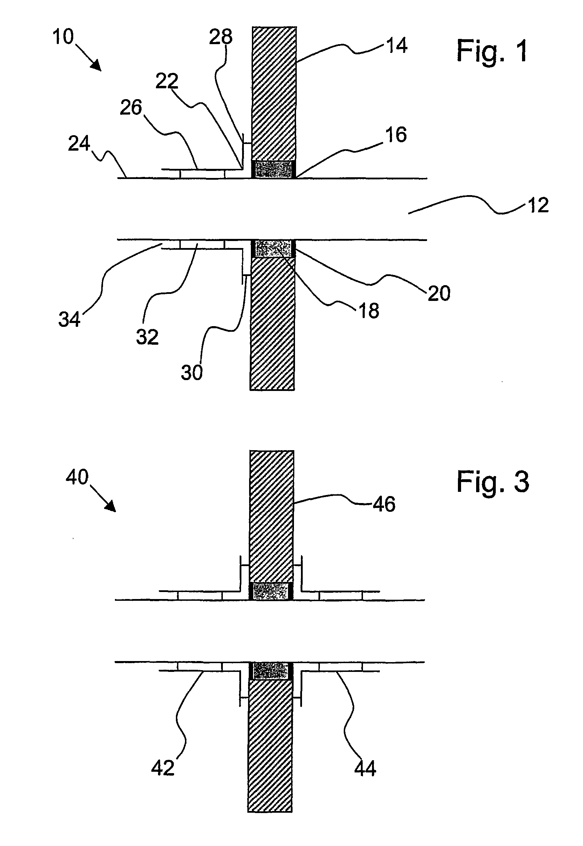

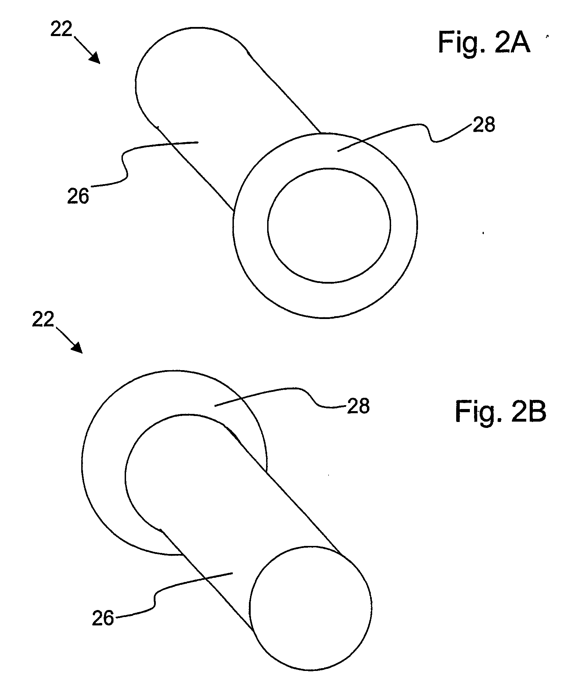

Fig. 1 schematically shows a longitudinal cross-section of a ventilation duct construction 10 according to one embodiment of the present invention. The Figure illustrates part of a ventilation duct 12 through which air is allowed to flow. The ventilation duct construction 10 also comprises a wall 14 having a through hole 16, through which the ventilation duct 12 is passed. The through hole 16 surrounding the ventilation duct 12 is sealed by means of insulation 18, such as fire insulation of any suitable type, e.g. mineral wool. The two ends of the through hole are suitably defined by a respective plaster coat 20, which boarders on the outer surface of the penetrated wall 14. A shielding sheet structure 22, made of galvanised steel sheet, is arranged around the ventilation duct wall 24 on one side of the penetrated wall 14. The shielding sheet structure 22 comprises two portions. A first portion 26 of the shielding sheet structure 22 has essentially a tubular or sleeve shape and a thickness of about 0.7 mm. The first portion 26 extends in parallel with the ventilation duct 12 and surrounds the same. A second portion 28 of the shielding sheet structure 22 is generally ring-shaped, in the form of a disc with a hole. The second portion 28 is located at the end of the first portion 26 nearest to the penetrated wall 14, and extends in parallel with the penetrated wall 14. Thus, the second portion 28 is like a thin first portion end having an enlarged diameter (see Figs. 2A and 2B). Rivets 30 which are arranged between the shielding sheet structure 22 and both the duct wall 24 and the penetrated wall 14 keep the shielding sheet structure 22 at a distance of about 1 mm from both the duct wall 24 and the penetrated wall 14 so that an air gap 32 forms therebetween. Openings 34 at the end of the sheet 22 allow cold ambient air to enter into the gap 32. In case of fire at a location on the other side of the penetrated wall, i.e. the side not provided with the shielding sheet structure, the air inside the adjacent ventilation duct 12 will be affected. The temperature in the ventilation.duct 12 will rise, and this temperature rise will propagate along the ventilation duct 12 through the penetrated wall 14. The shielding sheet structure 22 will have the function of increasing the fire-retardant capability of the ventilation duct construction 10. The angled shielding sheet structure 22 will delay temperature rise on the outside of the construction 10 caused by heat from the inside of the ventilation duct 12 as well as heat penetrating the through hole 16 and the insulation 18. It is to be noted that the penetrated wall 14 is to be regarded as a part of the ventilation duct construction.

Figs. 2A and 2B schematically show perspective views of the shielding sheet structure 22 in Fig 1. In Fig. 2A the second portion 28 is seen nearest to the viewer, while in Fig. 2B the second portion 28 is seen farthest from the viewer. As is seen from these Figures, the shielding sheet structure 22 comprises a first tubular portion 26 and a second thin annular portion 28. The second portion 28 is arranged perpendicularly to the end of the first portion 26. The diameter of the second portion 28 is suitably large enough to shield at least the insulation sealing the through hole in the penetrated wall. It is to be understood that for a ventilation duct having a rectangular, square or other non-circular cross-section, the shielding sheet structure is suitably designed with corresponding cross-sections.

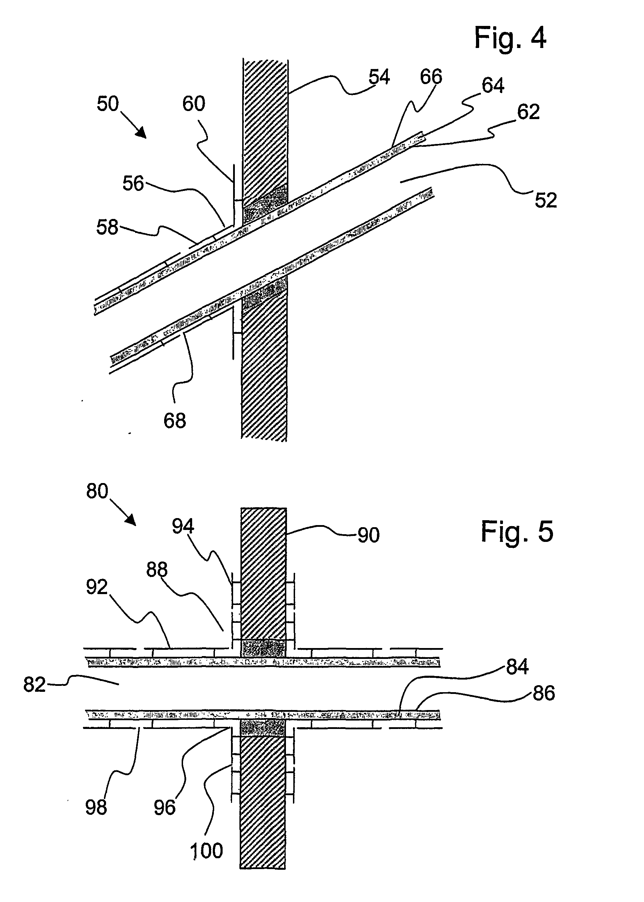

Fig. 3 schematically shows a longitudinal cross-section of a ventilation duct construction 40 according to another embodiment of the present invention. This ventilation duct construction 40 is similar to that of Fig. 1. However, in this case a shielding sheet structure 42, 44 is provided on both sides of a penetrated wall 46. This embodiment increases the fire-retardant capability of the construction on both sides of the wall 46.

Fig. 4 schematically shows a longitudinal cross-section of a ventilation duct construction 50 according to yet another embodiment of the present invention. Unlike the previously shown embodiments with a penetrated wall, the longitudinal axis of the ventilation duct 52 does not conform with the normal of the penetrated wall 54. Therefore, a shielding sheet structure 56 is designed so that the longitudinal axis of the first portion 58 does not conform with the normal of the plane of the second portion 60 but runs in parallel with the extension of the duct 52. The second portion 60 extends in parallel with the penetrated wall 54. Furthermore, Fig. 4 illustrates that on the outside of the ventilation duct wall 62 a fire insulation 64 is arranged. The fire insulation is delimited outermost by a metal cover 66. The shielding sheet structure 56 according to this embodiment is arranged not only in the vicinity of the penetrated wall 54 but also further away along the ventilation duct 52. Consequently, increased fire-retardancy is obtained for the entire shielded ventilation duct 52. In Fig. 4, the first portion 58 of the shielding sheet structure 56 is divided so that openings 68 allow the inflow of cooling air.

Fig. 5. schematically shows a longitudinal cross-section of a ventilation duct construction 80 according to a further embodiment of the present invention. In this embodiment, as in Fig. 4, a ventilation duct 82 is provided with insulation 84 at the duct wall 86. A shielding sheet structure 88 is provided on both sides of a penetrated wall 90. In this embodiment the first portion 92 and the second portion 94 are spaced apart, i.e. they are not in contact with each other. Thus, an opening 96 is created between the first portion 92 and the second portion 94 for intake and/or outflow of air. Furthermore additional openings 98 and 100, respectively, are provided on both the first portion 92 and the second portion 94, for further improvement of the air circulation.

It should be noted that the embodiments shown in the Figures are not to scale and are only illustrated schematically for elucidatory purposes.

It is to be understood that even though certain embodiments have been shown numerous modifications and variations can be made without departing from the scope of the present invention defined in the accompanied claims.

Thus, the shown features may be combined in numerous ways. Other features which have not been shown, such as the shielding sheet structure provided with perforations covering up to half of the total sheet area, are also possible.

## Claims

1. A ventilation duct construction, comprising
a ventilation duct through which air is allowed to flow, said ventilation duct being passed through a through hole in a wall and the hole around the duct being sealed by means of insulation; and
a shielding sheet structure comprising a first portion extending essentially in parallel with the ventilation duct, and a second portion extending essentially in parallel with the penetrated wall and being located at an end of said first portion nearest to the wall, said shielding sheet structure being arranged externally at least partially around the duct at such a distance that an air gap is formed between the shielding sheet structure and both the duct and the penetrated wall.

2. A ventilation duct construction as claimed in claim 1, wherein said shielding sheet structure is made of metal, such as galvanised steel.

3. A ventilation duct construction as claimed in any one of claims 1 - 2, wherein an opening for air intake is arranged at least at a free end of the first portion and/or at a free end of the second portion so that ambient air is allowed to enter between the shielding sheet structure and both the duct and the penetrated wall.

4. A ventilation duct construction as claimed in any one of claims 1 - 3, wherein said first portion and/or said second portion is provided with several openings for air intake and/or air outlet.

5. A ventilation duct construction as claimed in any one of claims 1 - 4, wherein said first portion and said second portion are spaced apart.

6. A ventilation duct construction as claimed in any one of claims 1 - 4, wherein said first portion and said second portion are in contact with each other.

7. A ventilation duct construction as claimed in any one of claims 1 - 6, which comprises, at least at a section of the duct provided with the shielding sheet structure, sound insulation inside an outer cover with a view to absorbing noise and thus providing a sound-absorbing function, the air gap being formed between the shielding sheet structure and both the outer cover and the penetrated wall.

8. A ventilation duct construction as claimed in claim 7, wherein said outer cover constitutes the duct wall.

9. A ventilation duct construction as claimed in any one of claims 7 - 8, wherein said sound insulation is supported from the inside by a foraminated support construction, preferably a perforated pipe, the support construction constituting the duct wall.

10. A ventilation duct construction as claimed in any one of claims 1-6, which comprises, at least at a section of the duct provided with the shielding sheet structure, fire insulation which is arranged on the outside of the duct wall, the air gap being formed between the shielding sheet structure and both the fire-insulated duct wall and the penetrated wall.

11. A ventilation duct construction as claimed in claim 10, wherein the fire insulation on the outside of the duct wall is provided with an outer surface layer, preferably a metal cover.

12. A ventilation duct construction as claimed in any one of claims 1 - 11, wherein spacer means are arranged to dimension said air gap.

13. A ventilation duct construction as claimed in claims 11 and 12, wherein said spacer means extend between the shielding sheet structure and said outer surface layer.

14. A ventilation duct construction as claimed in any one of claims 7 - 9 and claim 12, wherein said spacer means extend between the shielding sheet structure and said outer cover.

15. A ventilation duct construction as claimed in any one claims 12 - 14, wherein said spacer means extend between the shielding sheet structure and the penetrated wall.

16. A ventilation duct construction as claimed in any one of claims 1 - 15, wherein said air gap distance is less than 50 mm, preferably less than 20 mm, more preferably less than a few millimetres, such as about 1 mm.

17. A ventilation duct construction as claimed in any one of claims 1 - 16, wherein the thickness of the shielding sheet structure is less than 10 mm, preferably less than a few millimetres, more preferably about 1 mm.

18. A ventilation duct construction as claimed in any one of claims 1 - 17, wherein the shielding sheet structure is provided with through-holes.

19. A method of providing a fire protected penetration of a ventilation duct in a wall, comprising the steps of:
making a through hole in the wall;
passing the ventilation duct through the hole;
sealing the hole by means of insulation; and
placing a shielding sheet structure, which comprises a first and a second portion, externally at least partially around the duct at such a distance that an air gap is formed between the shielding sheet structure and both the duct and the penetrated wall, and so that the first portion extends essentially in parallel with the ventilation duct and the second portion extends essentially in parallel with the wall and being located at an end of said first portion nearest to the penetrated wall.

20. A method as claimed in claim 19, which further comprises the step of arranging the shielding sheet structure so that ambient air is allowed to enter between the shielding sheet structure and both the duct and the penetrated wall at least at a free end of the first portion and/or a free end of the second portion.

21. A method as claimed in any one of claims 19 - 20, wherein the shielding sheet structure is made of metal.

22. A method of providing a ventilation duct construction which comprises a ventilation duct through which air is allowed to flow, said ventilation duct being passed through a through hole in a wall, the method comprising the step of:
placing a shielding sheet structure, which comprises a first and a second portion, externally at least partially around the duct at such a distance that an air gap is formed between the shielding sheet structure and both the duct and the penetrated wall, and so that the first portion extends essentially in parallel with the ventilation duct and the second portion extends essentially in parallel with the wall and being located at an end of said first portion nearest to the penetrated wall.

23. A method as claimed in claim 22, which further comprises the step of arranging the shielding sheet structure so that ambient air is allowed to enter between the shielding sheet structure and both the duct and the penetrated wall at least at a free end of the first portion and/or a free end of the second portion.

24. A method as claimed in any one of claims 22 - 23, wherein said step of placing the sheet is preceded by the steps of:
making a through hole in the wall; and
passing the ventilation duct through the hole.

## Patentansprüche

1. Lüftungsleitungskonstruktion, die umfasst:
eine Lüftungsleitung, durch die Luft strömen kann, wobei die Lüftungsleitung durch ein Durchgangsloch in einer Wand hindurchgeführt wird und das Loch um die Leitung herum mit Isolierung abgedichtet ist; und
eine Abschirmblechstruktur, die einen ersten Abschnitt, der sich im Wesentlichen parallel zu der Lüftungsleitung erstreckt, und einen zweiten Abschnitt umfasst, der sich im Wesentlichen parallel zu der durchdrungenen Wand erstreckt und an einem Ende des ersten Abschnitts am nächsten an der Wand angeordnet ist, wobei die Abschirmblechstruktur außen wenigstens teilweise um die Leitung herum in einem Abstand angeordnet ist, durch den ein Luftspalt zwischen der Abschirmblechstruktur und sowohl der Leitung als auch der durchdrungenen Wand gebildet wird.

2. Lüftungsleitungskonstruktion nach Anspruch 1, wobei die Abschirmblechstruktur aus Metall, so beispielsweise verzinktem Stahl, besteht.

3. Lüftungsleitungskonstruktion nach einem der Ansprüche 1-2, wobei eine Öffnung zum Lufteinlass wenigstens an einem freien Ende des ersten Abschnitts und/oder an einem freien Ende des zweiten Abschnitts angeordnet ist, so dass Umgebungsluft zwischen der Abschirmblechstruktur und sowohl der Leitung als auch der durchdrungenen Wand eintreten kann.

4. Lüftungsleitungskonstruktion nach einem der Ansprüche 1-3, wobei der erste Abschnitt und/oder der zweite Abschnitt mit mehreren Öffnungen zum Lufteinlass und/oder Luftauslass versehen sind/ist.

5. Lüftungsleitungskonstruktion nach einem der Ansprüche 1-4, wobei der erste Abschnitt und der zweite Abschnitt voneinander beabstandet sind.

6. Lüftungsleitungskonstruktion nach einem der Ansprüche 1-4, wobei der erste Abschnitt und der zweite Abschnitt in Kontakt miteinander sind.

7. Lüftungsleitungskonstruktion nach einem der Ansprüche 1-6, die an wenigstens einem Teil der Leitung, der mit der Abschirmblechstruktur versehen ist, Schallisolierung innerhalb einer äußeren Abdeckung umfasst, um Schall zu dämpfen und so eine Schalldämpffunktion zu erfüllen, wobei der Luftspalt zwischen der Abschirmblechstruktur und sowohl der äußeren Abdeckung als auch der durchdrungenen Wand ausgebildet ist.

8. Lüftungsleitungskonstruktion nach Anspruch 7, wobei die äußere Abdeckung die Leitungswand bildet.

9. Lüftungsleitungskonstruktion nach einem der Ansprüche 7-8, wobei die Schallisolierung von innen durch eine mit Löchern versehene Tragestruktur, vorzugsweise ein perforiertes Rohr, getragen wird und die Tragekonstruktioh die Leitungswand bildet.

10. Lüftungsleitungskonstruktion nach einem der Ansprüche 1-6, die an wenigstens einen Teil der Leitung, der mit der Abschirmblechstruktur versehen ist, Feuerisolierung umfasst, die an der Außenseite der Leitungswand angeordnet ist, wobei der Luftspalt zwischen der Abschirmblechstruktur und sowohl der feuerisolierten Leitungswand als auch der durchdrungenen Wand ausgebildet ist.

11. Lüftungsleitungskonstruktion nach Anspruch 10, wobei die Feuerisolierung an der Außenseite der Leitungswand mit einer äußeren Oberflächenschicht, vorzugsweise einer Metallabdeckung, versehen ist.

12. Lüftungsleitungskonstruktion nach einem der Ansprüche 1-11, wobei Abstandshaltereinrichtungen die Abmessung des Luftspaltes bestimmen.

13. Lüftungsleitungskonstruktion nach den Ansprüchen 11 und 12, wobei sich die Abstandshaltereinrichtungen zwischen der Abschirmblechstruktur und der äußeren Oberflächenschicht erstrecken.

14. Lüftungsleitungskonstruktion nach einem der Ansprüche 7-9 und Anspruch 12, wobei sich die Abstandshaltereinrichtungen zwischen der Abschirmblechstruktur und der äußeren Abdeckung erstrecken.

15. Lüftungsleitungskonstruktion nach einem der Ansprüche 12-14, wobei sich die Abstandshaltereinrichtungen zwischen der Abschirmblechstruktur und der durchdrungenen Wand erstrecken.

16. Lüftungsleitungskonstruktion nach einem der Ansprüche 1-15, wobei der Luftspaltabstand weniger als 50 mm, vorzugsweise weniger als 20 mm und noch besser weniger als wenige Millimeter, so beispielsweise ungefähr 1 mm, beträgt.

17. Lüftungsleitungskonstruktion nach einem der Ansprüche 1-16, wobei die Dicke der Abschirmblechstruktur weniger als 10 mm, vorzugsweise weniger als wenige Millimeter, am Besten ungefähr 1 mm, beträgt.

18. Lüftungsleitungskonstruktion nach einem der Ansprüche 1-17, wobei die Abschirmblechstruktur mit Durchgangslöchern versehen ist.

19. Verfahren zum Schaffen einer feuergeschützten Wanddurchdringung einer Lüftungsleitung in einer Wand, das die folgenden Schritte umfasst:
Herstellen eines Durchgangslochs in der Wand;
Hindurchführen der Lüftungsleitung durch das Loch;
Abdichten des Lochs mittels Isolierung; und
Anbringen einer Abschirmblechstruktur, die einen ersten und einen zweiten Abschnitt umfasst, außen wenigstens teilweise um die Leitung herum in einem Abstand, durch den ein Luftspalt zwischen der Abschirmblechstruktur und sowohl der Leitung als auch der durchdrungenen Wand gebildet wird, und so, dass sich der erste Abschnitt im Wesentlichen parallel zu der Lüftungsleitung erstreckt und sich der zweite Abschnitt im Wesentlichen parallel zu der Wand erstreckt und sich an einem Ende des ersten Abschnitts am nächsten an der durchdrungenen Wand befindet.

20. Verfahren nach Anspruch 19, das des Weiteren den Schritt umfasst, in dem die Abschirmblechstruktur so angeordnet wird, dass Umgebungsluft zwischen der Abschirmblechstruktur und sowohl der Leitung als auch der durchdrungenen Wand wenigstens an einem freien Ende des ersten Abschnitts und/oder einem freien Ende des zweiten Abschnitts eintreten kann.

21. Verfahren nach einem der Ansprüche 19-20, wobei die Abschirmblechstruktur aus Metall besteht.

22. Verfahren zum Schaffen einer Lüftungsleitungskonstruktion, die eine Lüftungsleitung umfasst, durch die Luft strömen kann, wobei die Lüftungsleitung durch ein Durchgangsloch in einer Wand hindurchgeführt wird und das Verfahren den folgenden Schritt umfasst:
Anbringen einer Abschirmblechstruktur, die einen ersten und einen zweiten Abschnitt umfasst, außen wenigstens teilweise um die Leitung herum in einem Abstand, durch den ein Luftspalt zwischen der Abschirmblechstruktur und sowohl der Leitung als auch der durchdrungenen Wand gebildet wird, und so, dass sich der erste Abschnitt im Wesentlichen parallel zu der Lüftungsleitung erstreckt und sich der zweite Abschnitt im Wesentlichen parallel zu der Wand erstreckt und sich an einem Ende des ersten Abschnitts am nächsten an der durchdrungenen Wand befindet.

23. Verfahren nach Anspruch 22, das des Weiteren den Schritt umfasst, in dem die Abschirmblechstruktur so angeordnet wird, dass Umgebungsluft zwischen der Abschirmblechstruktur und sowohl der Leitung als auch der durchdrungenen Wand wenigstens an einem freien Ende des ersten Abschnitts und/oder einem freien Ende des zweiten Abschnitts eintreten kann.

24. Verfahren nach einem der Ansprüche 22-23, wobei dem Schritt des Anbringens des Blechs die folgenden Schritte vorangehen:
Herstellen eines Durchgangslochs in der Wand; und
Hindurchleiten der Lüftungsleitung durch das Loch.

## Revendications

1. Construction de conduit de ventilation, comprenant
un conduit de ventilation à travers lequel l'air peut pénétrer, ledit conduit de ventilation passant à travers un trou de passage dans une paroi et le trou autour du conduit étant fermé hermétiquement au moyen d'une isolation ; et
une structure de feuille de protection comprenant une première partie s'étendant essentiellement en parallèle avec le conduit de ventilation, et une deuxième partie s'étendant essentiellement en parallèle avec la paroi traversée et étant située au niveau d'une extrémité de ladite première partie la plus proche de la paroi, ladite structure de feuille de protection étant agencée de manière externe au moins partiellement autour du conduit à une distance telle qu'un intervalle d'air est formé entre la structure de feuille de protection et à la fois le conduit et la paroi traversée.

2. Construction de conduit de ventilation selon la revendication 1, dans laquelle ladite structure de feuille de protection est constituée d'un métal, tel que l'acier galvanisé.

3. Construction de conduit de ventilation selon l'une quelconque des revendications 1 à 2, dans laquelle une ouverture pour l'admission d'air est agencée au moins au niveau d'une extrémité libre de la première partie et/ou d'une extrémité libre de la deuxième partie de sorte que l'air ambiant peut pénétrer entre la structure de feuille de protection et à la fois le conduit et la paroi traversée.

4. Construction de conduit de ventilation selon l'une quelconque des revendications 1 à 3, dans laquelle ladite première partie et/ou ladite deuxième partie est pourvue de plusieurs ouvertures pour l'admission d'air et/ou la sortie d'air.

5. Construction de conduit de ventilation selon l'une quelconque des revendications 1 à 4, dans laquelle ladite première partie et ladite deuxième partie sont espacées.

6. Construction de conduit de ventilation selon l'une quelconque des revendications 1 à 4, dans laquelle ladite première partie et ladite deuxième partie sont en contact l'une avec l'autre.

7. Construction de conduit de ventilation selon l'une quelconque des revendications 1 à 6, qui comprend, au moins au niveau d'une section du conduit pourvu de la structure de feuille de protection, une isolation acoustique à l'intérieur d'une couche de recouvrement externe destinée à absorber le bruit et ainsi fournir une fonction d'absorption acoustique, l'intervalle d'air étant formé entre la structure de feuille de protection et à la fois la couche de recouvrement externe et la paroi traversée.

8. Construction de conduit de ventilation selon la revendication 7, dans laquelle la couche de recouvrement externe constitue la paroi du conduit.

9. Construction de conduit de ventilation selon l'une quelconque des revendications 7 à 8, dans laquelle l'isolation acoustique est supportée depuis l'intérieur par une construction de support troué, de préférence un tuyau perforé, la construction de support constituant la paroi du conduit.

10. Construction de conduit de ventilation selon l'une quelconque des revendications 1 à 6, qui comprend, au moins au niveau d'une section du conduit pourvu de la structure de feuille de protection, une isolation contre le feu qui est agencée sur l'extérieur de la paroi du conduit, l'intervalle d'air étant formé entre la structure de feuille de protection et à la fois la paroi de conduit isolée contre le feu et la paroi traversée.

11. Construction de conduit de ventilation selon la revendication 10, dans laquelle l'isolation contre le feu sur l'extérieur de la paroi du conduit est pourvue d'une couche de surface extérieure, de préférence une couche de recouvrement métallique.

12. Construction de conduit de ventilation selon l'une quelconque des revendications 1 à 11, dans laquelle des moyens formant pièce d'écartement sont agencés en fonction de ladite dimension de l'intervalle d'air.

13. Construction de conduit de ventilation selon les revendications 11 et 12, dans laquelle les moyens formant pièce d'écartement s'étendent entre la structure de feuille de protection et ladite couche de surface extérieure.

14. Construction de conduit de ventilation selon l'une quelconque des revendications 7 à 9 et selon la revendication 12, dans laquelle lesdits moyens formant pièce d'écartement s'étendent entre la structure de feuille de protection et ladite couche de recouvrement extérieure.

15. Construction de conduit de ventilation selon l'une quelconque des revendications 12 à 14, dans laquelle lesdits moyens formant pièce d'écartement s'étendent entre la structure de feuille de protection et la paroi traversée.

16. Construction de conduit de ventilation selon l'une quelconque des revendications 1 à 15, dans laquelle la distance dudit intervalle d'air est inférieure à 50 mm, de préférence inférieure à 20 mm, de manière plus préférée inférieure à quelques millimètres, telle qu'environ 1 mm.

17. Construction de conduit de ventilation selon l'une quelconque des revendications 1 à 16, dans laquelle l'épaisseur de la structure de feuille de protection est inférieure à 10 mm, de préférence inférieure à quelques millimètres, de manière plus préférée égale à environ 1 mm.

18. Construction de conduit de ventilation selon l'une quelconque des revendications 1 à 17, dans laquelle la structure de feuille de protection est pourvue de trous de passage.

19. Procédé destiné à fournir une pénétration protégée contre le feu d'un conduit de ventilation dans une paroi, comprenant les étapes consistant à :
faire un trou de passage dans la paroi ;
passer le conduit de ventilation à travers le trou ;
fermer hermétiquement le trou à l'aide d'une isolation ; et
placer une structure de feuille de protection, qui comprend une première et une deuxième parties, de manière externe au moins partiellement autour du conduit à une distance telle qu'un intervalle d'air est formé entre la structure de feuille de protection et à la fois le conduit et la paroi traversée, et de sorte que la première partie s'étend essentiellement en parallèle avec le conduit de ventilation et la deuxième partie s'étend essentiellement en parallèle avec la paroi et étant située au niveau d'une extrémité de ladite première partie la plus proche de la paroi traversée.

20. Procédé selon la revendication 19, qui comprend en outre l'étape consistant à agencer la structure de feuille de protection de sorte que l'air ambiant peut entrer entre la structure de feuille de protection et à la fois le conduit et la paroi traversée au moins au niveau d'une extrémité libre de la première partie et/ou d'une extrémité libre de la deuxième partie.

21. Procédé selon l'une quelconque des revendications 19 à 20, dans lequel la structure de feuille de protection est constituée de métal.

22. Procédé destiné à fournir une construction de conduit de ventilation qui comprend un conduit de ventilation à travers lequel l'air peut pénétrer, ledit conduit de ventilation passant à travers un trou de passage dans une paroi, le procédé comprenant l'étape consistant à :
placer une structure de feuille de protection, qui comprend une première et une deuxième parties, de manière externe au moins partiellement autour du conduit à une distance telle qu'un intervalle d'air est formé entre la structure de feuille de protection et à la fois le conduit et la paroi traversée, et de sorte que la première partie s'étend essentiellement en parallèle avec le conduit de ventilation et la deuxième partie s'étend essentiellement en parallèle avec la paroi et étant située au niveau d'une extrémité de ladite première partie la plus proche de la paroi traversée.

23. Procédé selon la revendication 22, qui comprend en outre l'étape consistant à agencer la structure de feuille de protection de sorte que l'air ambiant peut pénétrer entre la structure de feuille de protection et à la fois le conduit et la paroi traversée au moins au niveau d'une extrémité libre de la première partie et/ou d'une extrémité libre de la deuxième partie.

24. Procédé selon l'une quelconque des revendications 22 à 23, dans lequel ladite étape consistant à placer la feuille est précédée par les étapes consistant à :
faire un trou de passage dans la paroi ; et
passer le conduit de ventilation à travers le trou.
